# FASCICULE DE BREVET EUROPEEN

(11) **EP 0 876 122 B1**
(45) Date de publication et mention de la délivrance du brevet: **11.07.2001**
(21) Numéro de dépôt: 97901659.9
(22) Date de dépôt: 23.01.1997
(51) Int. Cl.: A47J 43/10, A47J 43/07, A47J 43/044

(54) **APPAREIL ELECTROMENAGER DE PREPARATION CULINAIRE, DU GENRE ROBOT MENAGER MULTI-USAGES, COMPORTANT UN MOYEN D'APPUI POUR L'ENSEMBLE DE TRAVAIL ROTATIF**
ELEKTRISCHE KÜCHENMASCHINE ZUM ZUBEREITEN VON NAHRUNGSMITTELN, WIE EINE MEHRZWECKKÜCHENMASCHINE MIT EINEM TRAGELEMENT FÜR DIE ROTIERENDE ARBEITSVORRICHTUNG
HOUSEHOLD FOOD PREPARATION APPLIANCE SUCH AS A MULTI-FUNCTION FOOD PROCESSOR COMPRISING A BEARING MEANS FOR THE ROTARY WORKING ASSEMBLY

(30) Priorité: 24.01.1996 FR 9601023
(43) Date de publication de la demande: 11.11.1998
(73) Titulaire: SEB S.A., 69130 Ecully (FR)
(72) Inventeur: MARTIN, Guy, F-65290 Louey (FR)
(74) Mandataire: Kiehl, Hubert
(86) Numéro de dépôt international: FR9700135
(87) Numéro de publication internationale: WO9726817

(56) Documents cités:
- DE-C- 382 060
- FR-A- 1 420 840
- FR-A- 2 642 294
- US-A- 4 813 624

## Description

### DOMAINE TECHNIQUE

La présente invention se rapporte au domaine technique général des appareils électroménagers de préparation culinaire, du genre robot ménager multiusages ou polyvalent ou encore mini ou multi-hachoirs pourvu d'un outil de travail rotatif susceptible d'être mis en place contre le fond d'un récipient.

La présente invention concerne un appareil électroménager de préparation culinaire, du genre robot ménager multi-usages, comportant un récipient de travail et un ensemble de travail rotatif incluant un bloc moteur avec un axe entraîneur apte à porter un outil de travail, ledit ensemble étant susceptible d'être mis en place dans le récipient, sensiblement contre le fond dudit récipient, en association avec un moyen d'appui.

Dans le cadre de l'invention, il convient d'entendre par le terme appareil électroménager de préparation culinaire, du genre robot ménager multi-usages, tous les appareils électriques dont l'outil de travail rotatif doit être disposé dans un réceptacle sensiblement en appui contre le fond de manière à pouvoir assumer la fonction dévolue à l'outil, et ce indépendamment du type d'outil utilisé, dès l'instant qu'il est en rotation dans le réceptacle. Dès lors, le terme appareil de préparation culinaire revêt, au sens de l'invention un sens large incluant des appareils divers non limités par leur fonction de préparation culinaire qui peut consister à titre d'exemple non limitatif, à hacher, mélanger, broyer, émulsionner, etc...

### TECHNIQUE ANTERIEURE

De tels appareils sont par exemple décrits dans la demande de brevet FR-A-2642294 qui se réfère à un appareil coupeur-mélangeur pour préparation culinaire. L'appareil décrit comporte une cuve dans laquelle peut être rapporté un ensemble de travail rotatif incluant un bloc moteur entraînant en rotation un axe entraîneur sur lequel est monté, de manière amovible ou non, un outil de travail tel qu'un couteau. En position de travail, l'axe entraîneur est mis en place dans la cuve, son extrémité venant reposer en appui contre cette dernière. D'une manière classique, il est prévu pour permettre le centrage et la rotation de l'outil de travail, en l'occurrence le couteau, de prévoir, d'intégrer dans le fond de la cuve, par exemple par surmoulage, un axe fixe s'étendant axialement à partir du fond et du centre de cette même cuve. De cette façon, l'arbre entraîneur et l'outil peuvent reposer en appui contre cet axe, ce qui permet le centrage et le support en rotation de l'outil. Une telle technique est largement répandue dans la plupart des petits appareils ménagers de préparation culinaire.

Les inconvénients de cette solution sont liés à la difficulté de nettoyer la cuve, puisqu'elle comporte en son fond et en son centre un insert en général métallique s'opposant notamment à un bon nettoyage mais pouvant être également à l'origine d'une prolifération bactérienne. Par ailleurs, la présence d'un insert ou axe métallique empêche l'utilisation des cuves dans des fours classiques ou à micro-ondes, ce qui est souvent perçu comme une contrainte d'utilisation négative par les consommateurs. L'insert affecte l'ergonomie de la cuve et rend difficile le service en nuisant au déplacement des ustensiles au fond de la cuve. Enfin, sur le plan industriel, la mise en place de l'insert métallique constitue une étape supplémentaire dans un procédé de fabrication, menant à un surcoût.

Un appareil selon les caractéristiques du préambule de la revendication 1 est connu du document US 4 813 624.

### EXPOSE DE L'INVENTION

L'objet de l'invention vise en conséquence à porter remède aux différents inconvénients énumérés précédemment et à fournir un appareil électroménager de préparation culinaire de conception générale simplifiée, sans pour autant limiter sa facilité d'utilisation.

La forme et la nature des matériaux favorisent par ailleurs l'amortissement des vibrations engendrées par les vitesses de rotation élevées.

Un autre objet de l'invention vise à fournir un appareil électroménager de préparation culinaire dont la mise en oeuvre est particulièrement facile.

Un autre objet de l'invention vise à réaliser un appareil électroménager de préparation culinaire dont la manipulation est facilitée, et ce à l'aide de moyens particulièrement simples et éprouvés.

Les objets assignés à l'invention sont atteints à l'aide d'un appareil électroménager de préparation culinaire, du genre robot ménager multi-usages/ ou polyvalent, comportant les caractéristiques de la revendication 1.

### DESCRIPTION SOMMAIRE DES DESSINS

D'autres avantages et particularités de l'invention ressortiront mieux à l'aide de la description faite ci-après, en référence aux dessins annexés qui montrent à titre d'exemples non limitatifs, des formes de réalisation de l'objet de l'invention dans lesquels :
- La figure 1 montre selon une coupe longitudinale transversale partielle, un détail d'un appareil électroménager de préparation culinaire conforme à l'invention montrant l'outil de travail en position relevée dans un récipient de travail.
- La figure 2 montre selon une coupe transversale longitudinale identique à la figure 1, un appareil électroménager de préparation culinaire conforme à l'invention dans lequel l'outil de travail est en position de travail contre le fond du récipient.

### MEILLEURE MANIERE DE REALISER L'INVENTION

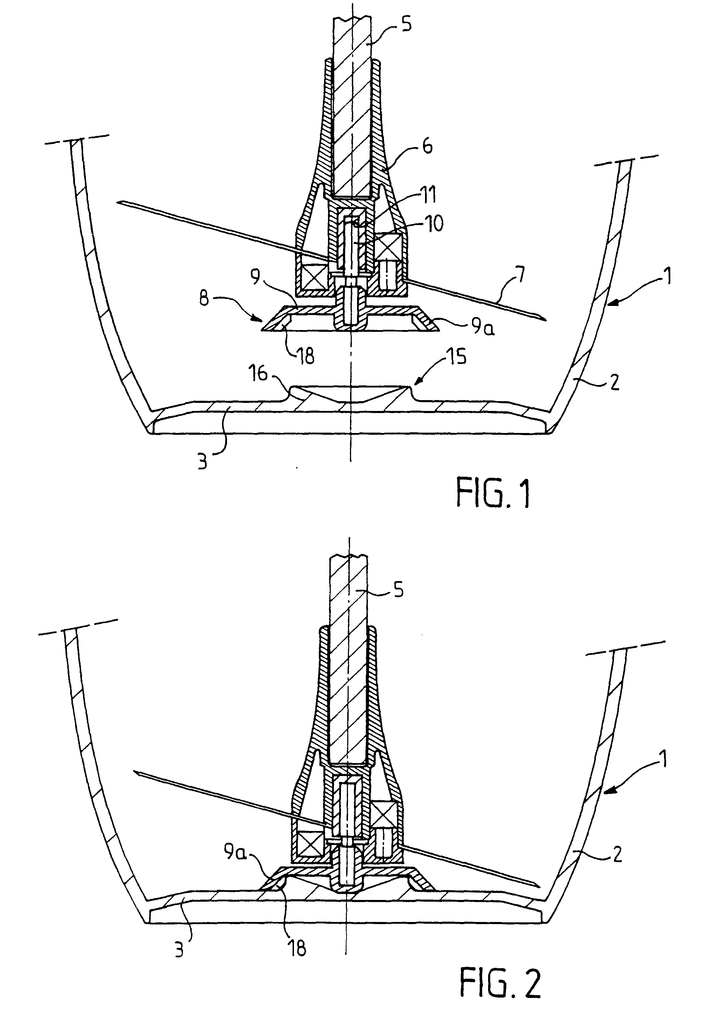

Les figures 1 et 2 montrent selon des vues partielles un appareil électroménager de préparation culinaire, du genre mini ou multi-hachoirs par exemple, conforme à l'invention. L'appareil comporte un récipient de travail 1, montré partiellement, et réalisé en tous matériaux. De manière avantageuse, le récipient 1 est réalisé en tous matériaux permettant son utilisation dans un four à micro-ondes, tels que des matériaux à base plastique ou en verre.

Le récipient 1 est de toutes formes appropriées, et par exemple sensiblement cylindrique et est délimité extérieurement par des parois latérales 2 et un fond 3.

L'appareil électroménager montré de manière partielle aux figures 1 et 2, comporte également un couvercle (non représenté aux figures) ainsi qu'un bloc moteur (non représenté aux figures) électrique monté de manière amovible ou non avec le couvercle. Le bloc moteur est solidaire d'un axe entraîneur 5 dont l'extrémité libre est solidaire, par exemple par emmanchement, d'un moyeu 6 apte à porter un outil de travail 7, par exemple un couteau. L'arbre entraîneur 5 forme avec le moyeu 6 et l'outil de travail 7 un ensemble de travail rotatif susceptible d'être mis en place dans le récipient 1 sensiblement contre le fond 3.

Selon une caractéristique importante de l'invention, l'ensemble de travail est susceptible d'être mis en place contre le fond 3 en association avec un moyen d'appui 8 qui est solidaire de l'ensemble de travail et monté libre en rotation par rapport à celui-ci.

Selon une version préférentielle de l'invention, le moyen d'appui 8 est formé par une embase 9, assimilable par exemple à un disque, de préférence sensiblement circulaire et monté libre à rotation à l'extrémité de l'ensemble de travail par l'intermédiaire d'un tourillon 10.

Selon une version avantageuse de l'invention, le tourillon 10 est solidaire par une extrémité de l'embase 9, et par exemple emmanché en force dans un orifice central de cette dernière, et tourillonnant par son autre extrémité dans un puits central 11 ménagé dans le moyeu 6. Selon ce montage, le guidage en rotation de l'embase 9 est réalisé par le tourillon 10.

Pour améliorer la capacité d'adhérence de l'embase 9 sur le fond 3, le matériau utilisé pour réaliser l'embase 9 peut être à base de tout matériau favorisant l'adhérence, et par exemple un matériau plastique, à base de silicone.

Selon une autre variante avantageuse de l'invention, le moyen d'appui 8 forme également un moyen de centrage de l'ensemble de travail rotatif, et en particulier de l'axe d'entraînement 5 relativement au fond 3. Cette caractéristique favorise notamment le comportement anti-vibratoire de l'appareil.

Selon une version avantageuse de l'invention non représentée aux figures, le moyen d'appui 8 peut constituer un moyen de centrage en association avec au moins une partie des parois latérales 3 du récipient 1. Dans une telle réalisation, le diamètre extérieur de l'embase 9 est sensiblement égal au diamètre du fond 3 de manière à permettre à l'embase 9 de se guider au moins en partie contre les parois latérales 3 lors de la mise en place de l'ensemble de travail dans le récipient 1. Un même moyen d'appui 8 peut ainsi servir pour plusieurs récipients de diamètres différents, par exemple, pour un petit diamètre, le moyen d'appui se prolonge jusqu'aux parois 3 alors que pour un récipient de grand diamètre, le même moyen d'appui correspond sensiblement à la portion centrale du récipient.

Selon une autre variante de réalisation, le moyen d'appui 8 forme un moyen de centrage en association avec une conformation 15 ménagée dans le fond 3 et dont le profil est adapté pour faciliter le centrage du moyen d'appui 8. Selon cette réalisation, la conformation 15 est formée par une collerette 16, de préférence partie intégrante du fond 3, dénivelée de préférence en faisant saillie en position centrale par rapport au fond 3 et à son plan général d'extension. Dans la version préférentielle montrée aux figures 1 et 2, la collerette 16 présente en son centre une cavité, ou un bombage concave.
De manière à faciliter le centrage de l'embase 9 sur la collerette 16, l'embase 9 est pourvue à sa périphérie d'une jupe 9a formant un bord périphérique tombé, destinée à venir s'emboîter et épouser la périphérie externe de la collerette 16. Avantageusement la face interne de l'embase 9 est pourvue, de préférence dans la face interne de la jupe 9a, d'une série de crans longitudinaux 18 destinés à augmenter l'adhérence sur le fond 3, en particulier sur la collerette 16. Dans un tel cas, le diamètre de la collerette 16 est sensiblement identique au diamètre interne de la face inférieure de l'embase 9 pour que cette dernière vienne se bloquer en position fixe sur la collerette par emboîtement.

Le mode de fonctionnement de l'appareil conforme à l'invention est le suivant.

Après avoir rempli le récipient 1 des ingrédients à traiter (viande, légume, fruit, etc...), l'utilisateur met en place l'ensemble de travail dans le récipient tel que cela est montré à la figure 1 et ferme le récipient à l'aide du couvercle. L'ensemble de travail est ensuite progressivement abaissé sensiblement axialement dans le récipient jusqu'à ce que l'embase 9 vienne en contact avec le fond 3. Le guidage et le centrage de l'ensemble de travail sont favorisés par l'emboîtement progressif de la jupe 9a sur la collerette 16 dont les dimensions et le profil sont adaptés ou conjugués. Lorsque l'embase 9 est contre le fond 3, l'ensemble de travail est parfaitement positionné et centré dans le récipient et l'utilisateur peut mettre en marche l'appareil.

Lors de la rotation de l'axe 5, l'embase 9 est fixe sur le fond 3 et bloquée en rotation par simple adhérence et pression alors que l'outil 7 est en rotation. L'utilisation de l'appareil et la mise en place de l'ensemble de travail rotatif sont par conséquent particulièrement simplifiés grâce à la progressivité naturelle du centrage de l'embase 9 sur la collerette 16.
En outre, la suppression de tout moyen, en particulier métallique de centrage solidaire du récipient 1 permet à ce dernier d'être utilisé dans des fours à microondes. Ceci permet de supprimer toutes les étapes intermédiaires de montage, démontage et transvasement des produits ayant été traités dans le récipient 1. L'aspect esthétique d'un récipient sans insert métallique est également appréciable, tout comme la facilité de nettoyage.

### POSSIBILITES D'APPLICATION INDUSTRIELLE

L'invention trouve son application dans le domaine technique des appareils électroménagers de préparation culinaire.

## Revendications

1. Appareil électroménager de préparation culinaire, du genre robot ménager multi-usages, ou polyvalent, comportant un récipient (1) de travail et un ensemble de travail rotatif (5,6,7) entraîné par un bloc moteur avec un axe entraîneur (5) apte à porter un outil de travail (7), ledit ensemble étant susceptible d'être mis en place dans le récipient (1) sensiblement contre le fond (3) dudit récipient (1) en association avec un moyen d'appui (8) solidaire de l'ensemble de travail, caractérisé en ce que le moyen d'appui (8) est monté libre à rotation à l'extrémité de l'ensemble de travail (5, 6, 7).

2. Appareil selon la revendication 1 caractérisé en ce que le moyen d'appui (8) forme également un moyen de centrage de l'axe (5) relativement au fond (3).

3. Appareil selon la revendication 2 caractérisé en ce que le moyen d'appui (8) forme un moyen de centrage en association avec une conformation (15) ménagée dans le fond (3) et de profil adapté pour faciliter le centrage du moyen d'appui (8).

4. Appareil selon la revendication 2 caractérisé en ce que le moyen d'appui (8) forme un moyen de centrage en association avec au moins une partie des parois latérales du récipient (1), contre lesquelles il est guidé lors de la mise en place de l'axe (5) avec l'outil (7).

5. Appareil selon l'une des revendications 1 à 4 caractérisé en ce que le moyen d'appui (8) est formé par une embase (9) montée libre à rotation à l'extrémité de l'ensemble de travail par l'intermédiaire d'un tourillon (10).

6. Appareil selon la revendication 5 caractérisé en ce que le tourillon (10) est emmanché dans l'embase (9).

7. Appareil selon la revendication 5 ou 6 caractérisé en ce que l'embase (9) est un disque, de préférence sensiblement circulaire, réalisé dans un matériau souple.

8. Appareil selon l'une des revendications 5 à 7 caractérisé en ce que l'embase (9) comporte à sa face inférieure, destinée à venir en contact avec le fond (3) du récipient (1), une série de crans (18) pour augmenter l'adhérence.

9. Appareil selon l'une des revendications 1 à 8 caractérisé en ce que l'ensemble de travail comporte un moyeu (6), de préférence emmanché sur l'extrémité de l'axe entraîneur (5), ledit moyeu (6) supportant l'outil de travail (7).

10. Appareil selon les revendications 5 et 9 caractérisé en ce que le tourillon (10) est solidaire d'une part de l'embase (9) et d'autre part du moyeu (6).

11. Appareil selon la revendication 3 caractérisé en ce que la conformation (15) est formée par une collerette (16) dénivelée par rapport au fond (3).

12. Appareil selon la revendication 11 caractérisé en ce que la collerette (16) est partie intégrante du récipient (1) et de dimension et profil adaptés à l'embase (9) pour que cette dernière vienne se bloquer en position fixe sur la collerette (16), par emboîtement.

13. Appareil selon l'une des revendications 1 à 12 caractérisé en ce que le récipient (1) est en verre.

## Patentansprüche

1. Elektro-Küchenmaschine zum Zubereiten von Nahrungsmitteln, von der Art einer Viel- bzw. Mehrzweckküchenmaschine, mit einem Arbeitsbehälter (1) und einer drehbaren Arbeitsvorrichtung (5, 6, 7), die von einem Motorblock mit einer Antriebsachse (5) angetrieben wird, welche das Arbeitswerkzeug (7) tragen kann, wobei die genannte Vorrichtung in den Behälter (1) im wesentlichen am Boden (3) des genannten Behälters (1) in Verbindung mit einem Abstützmittel (8) einsetzbar ist, das mit der Arbeitsvorrichtung verbunden ist, dadurch gekennzeichnet, daß das Abstützmittel (8) am Ende der Arbeitsvorrichtung (5, 6, 7) frei drehbar gelagert ist.

2. Maschine nach Anspruch 1, dadurch gekennzeichnet, daß das Abstützmittel (8) auch ein Mittel zum Zentrieren der Achse (5) bezüglich des Bodens (3) bildet.

3. Maschine nach Anspruch 2, dadurch gekennzeichnet, daß das Abstützmittel (8) ein Zentriermittel in Verbindung mit einer Ausformung (15) bildet, die im Boden (3) ausgeführt ist und deren Profil darauf abgestimmt ist, das Zentrieren des Abstützmittels (8) zu erleichtern.

4. Maschine nach Anspruch 2, dadurch gekennzeichnet, daß das Abstützmittel (8) ein Zentriermittel in Verbindung mit zumindest einem Teil der Seitenwände des Behälters (1) bildet, an denen es beim Einsetzen der Achse (5) mit dem Werkzeug (7) geführt ist.

5. Maschine nach einem der Ansprüche 1 bis 4, dadurch gekennzeichnet, daß das Abstützmittel (8) durch eine Fußfläche (9) gebildet ist, die mittels eines Zapfens (10) am Ende der Arbeitsvorrichtung frei drehbar gelagert ist.

6. Maschine nach Anspruch 5, dadurch gekennzeichnet, daß der Zapfen (10) in die Fußfläche (9) eingepreßt ist.

7. Maschine nach Anspruch 5 oder 6, dadurch gekennzeichnet, daß die Fußfläche (9) eine vorzugsweise im wesentlichen kreisförmige Scheibe ist, die aus weichem Material hergestellt ist.

8. Maschine nach einem der Ansprüche 5 bis 7, dadurch gekennzeichnet, daß die Fußfläche (9) an ihrer Innenseite, die mit dem Boden (3) des Behälters (1) in Kontakt gelangen soll, eine Reihe von Rastkerben (18) aufweist, um die Haftfestigkeit zu erhöhen.

9. Maschine nach einem der Ansprüche 1 bis 8, dadurch gekennzeichnet, daß die Arbeitsvorrichtung eine Nabe (6) aufweist, die vorzugsweise am Ende der Antriebsachse (5) angepreßt ist, wobei die genannte Nabe (6) das Arbeitswerkzeug (7) trägt.

10. Maschine nach Anspruch 5 und 9, dadurch gekennzeichnet, daß der Zapfen (10) fest mit der Fußfläche (9) einerseits und der Nabe (6) andererseits verbunden ist.

11. Maschine nach Anspruch 3, dadurch gekennzeichnet, daß die Ausformung (15) durch einen Kragen (16) gebildet ist, der bezüglich des Bodens (3) stufenförmig ausgeführt ist.

12. Maschine nach Anspruch 11, dadurch gekennzeichnet, daß der Kragen (16) Bestandteil des Behälters (1) ist, dessen Abmessungen und Profil auf die Fußfläche (9) abgestimmt sind, damit diese durch Aufstecken in fester Stellung am Kragen (16) gesichert ist.

13. Maschine nach einem der Ansprüche 1 bis 12, dadurch gekennzeichnet, daß der Behälter (1) aus Glas besteht.

## Claims

1. A household appliance for preparing food, of the multipurpose foodprocessor type, comprising a working vessel (1) and a rotary working assembly (5, 6, 7) driven by a motor with a drive shaft (5) suitable for carrying a working tool (7), said assembly being suitable for being put in place in the vessel (1), substantially against the bottom (3) of said vessel (1), in association with support means (8) secured to the working assembly, the appliance being characterized in that the support means (8) is mounted to rotate freely at the end of the working assembly (5, 6, 7).

2. An appliance according to claim 1, characterized in that the support means (8) also forms centering means for centering the shaft (5) relative to the bottom (3).

3. An appliance according to claim 2, characterized in that the support means (8) forms centering means in association with a shape (15) formed in the bottom (3), and has a profile that is designed to facilitate centering of the support means (8).

4. An appliance according to claim 2, characterized in that the support means (8) forms centering means in association with at least a part of the side walls of the vessel (1), against which it is guided when the shaft (5) is put in place with the tool (7).

5. An appliance according to any one of claims 1 to 4, characterized in that the support means (8) is formed by a seat (9) mounted to rotate freely at the end of the working assembly by means of a spindle (10).

6. An appliance according to claim 5, characterized in that the spindle (10) is force-fitted into the seat (9).

7. An appliance according to claim 5 or 6, characterized in that the seat (9) is a disk, preferably substantially circular, made of a flexible material.

8. An appliance according to any one of claims 5 to 7, characterized in that the seat (9) includes at its bottom face, designed to come into contact with the bottom (3) of the vessel (1), a series of teeth (18) in order to increase adherence.

9. An appliance according to any one of claims 1 to 8, characterized in that the working assembly includes a hub (6), preferably force-fitted on the end of the drive shaft (5), said hub (6) supporting the working tool (7).

10. An appliance according to claims 5 and 9, characterized in that the spindle (10) is secured firstly to the seat (9) and secondly to the hub (6).

11. An appliance according to claim 3, characterized in that the shape (15) is formed by a collar (16) that is stepped relative to the bottom (3).

12. An appliance according to claim 11, characterized in that the collar (16) is an integral part of the vessel (1) and has a dimension and profile that corresponds to the seat (9) so that said seat becomes locked in a fixed position on the collar (16) by interfitting thereon.

13. An appliance according to any one of claims 1 to 12, characterized in that the vessel (1) is made of glass.
